# FASCICULE DE BREVET EUROPEEN

(11) **EP 3 557 714 B1**
(45) Date de publication et mention de la délivrance du brevet: **23.09.2026**
(21) Numéro de dépôt: 19170418.8
(22) Date de dépôt: 19.04.2019
(51) Int. Cl.: H02J 3/26, H02J 13/00, G01R 19/00

(54) **PROCÉDÉ D'ASSOCIATION DE CHAQUE COMPTEUR D'UNE PLURALITÉ DE COMPTEURS À UN DÉPART TRIPHASE D'UN TRANSFORMATEUR ET DISPOSITIF ASSOCIÉ**
VERFAHREN UND ZUGEHÖRIGE VORRICHTUNG ZUM ZUORDNEN EINES JEDEN ZÄHLERS EINER VIELZAHL VON ZÄHLERN ZU EINEM DREIPHASIGEN ABGANG EINES TRANSFORMATORS.
METHOD AND ASSOCIATED DEVICE FOR ASSOCIATING EACH COUNTER OF A PLURALITY OF COUNTERS TO A THREE-PHASE OUTLET OF A TRANSFORMER

(30) Priorité: 20.04.2018 FR 1853510
(43) Date de publication de la demande: 23.10.2019
(73) Titulaire: SAGEMCOM ENERGY & TELECOM SAS, 92270 Bois-Colombes (FR)
(72) Inventeur: BENOIT, Clémentine, 38100 Grenoble (FR); DADOUCHI, Florian, 38600 Fontaine (FR); MONDRAGON CARDENAS, Arturo, 38100 Grenoble (FR); PELLEREJ, Rémi, 38000 Grenoble (FR)
(74) Mandataire: Cabinet Le Guen Maillet

(56) Documents cités:
- EP-B1- 3 391 507
- CA-A1- 2 915 674
- US-A1- 2017 299 640

## Description

### DOMAINE TECHNIQUE DE L'INVENTION

Le domaine technique de l'invention est celui de la cartographie des réseaux électriques. La présente invention concerne un procédé d'association de chaque compteur d'une pluralité de compteurs à un départ triphasé d'un transformateur, et un dispositif associé.

### ARRIERE-PLAN TECHNOLOGIQUE DE L'INVENTION

Il arrive souvent que l'association entre compteurs et transformateurs ne soit connue que partiellement ou encore à déterminer. Cette étape est notamment importante afin de pouvoir estimer la charge de chaque transformateur, de chacun des départs triphasés de chaque transformateur et de chacune des phases de ce départ ou bien encore savoir quels compteurs il est nécessaire de changer de phase pour rééquilibrer le réseau.

Pour effectuer une telle association, une première méthode basée sur la conservation de l'énergie a été proposée. Plus particulièrement, cette méthode utilise le principe de conservation de l'énergie pour retrouver quels transformateurs alimentent quels compteurs : la somme de l'énergie consommée par les compteurs doit se retrouver au niveau de chaque transformateur. Cependant, une telle méthode présente des inconvénients. Tout d'abord, elle ne fonctionne que si la quasi-totalité des puissances consommées sont mesurées et ces mesures remontées afin d'être prise en compte par ladite méthode. Elle est donc peu robuste aux erreurs de mesures, de synchronisation, aux données "perdues" et aux pertes (techniques - par échauffement des câbles - et non techniques - par vol de puissance). De plus, le calcul étant combinatoire, le nombre de compteurs à trier doit être limité (en général quelques centaines). En outre, elle nécessite d'effectuer des mesures au niveau de chaque compteur, mais également au niveau de chaque départ triphasé de chaque transformateur, ce qui peut imposer l'installation de système provisoire pour rendre cette mesure possible. Enfin, elle ne permet pas de déterminer la topologie du réseau, c'est-à-dire la manière dont les compteurs dudit réseau sont connectés les uns par rapport aux autres. On pourra également citer le document CA 2 915 674 A1.

Il existe donc un besoin d'une méthode permettant de cartographier le réseau électrique, c'est-à-dire d'associer chaque compteur à une phase, un départ triphasé et un transformateur sans nécessiter un retour de mesure de l'ensemble ou de la plupart des compteurs et sans nécessiter d'effectuer des mesures au niveau de chaque transformateur, tout en permettant de traiter un réseau comportant un grand nombre de compteurs.

### RESUME DE L'INVENTION

L'invention offre une solution aux problèmes évoqués précédemment, en utilisant le lien qui existe entre chaque phase d'un départ triphasé afin de déterminer la topologie d'un réseau sans avoir à effectuer de mesures au niveau du transformateur, mais seulement au niveau des compteurs à caractériser. De plus, les principes de cette mesure la rendent peu sensible aux anomalies de mesures telles que la non-prise en compte d'un ou plusieurs compteurs ou bien encore l'existence de « prélèvements sauvages ».Un premier aspect de l'invention concerne un procédé d'association selon la revendication 1.

Grâce à l'invention, il est donc possible de pouvoir associer chaque compteur à un groupe et donc à un départ triphasé. Ce départ triphasé étant lui-même associé à un transformateur, le procédé selon un premier aspect de l'invention permet donc d'associer chaque compteur d'une pluralité de compteurs à un départ triphasé d'un transformateur. Les inventeurs ont en effet découvert qu'il était possible d'utiliser le lien qui existe entre les différentes phases d'un départ triphasé. Ce lien se traduit par exemple par le fait qu'un changement de consommation sur une phase aura un impact sur la tension des deux autres phases du départ triphasé. La mesure de ce lien est faite dans l'invention à l'aide de mesures de tension effectuées par des compteurs. En effet, de manière générale, si deux tensions mesurées par deux compteurs différents présentent une similitude négative, par exemple qu'elles sont négativement corrélées, alors ces compteurs sont en principes connectés à deux phases différentes d'un même départ triphasé.

La mesure de la similitude peut par exemple être réalisée au moyen d'une corrélation de Pearson ou bien par un calcul d'un coefficient de régression (cet aspect sera détaillé dans la suite). De la même manière, les tensions mesurées par deux compteurs connectés à deux phases d'un même départ triphasé ne présentent pas forcément de similitude négative. En revanche, dans le cas d'un déséquilibre important, cette similitude devient négative. Dans cette situation, les tensions mesurées par trois compteurs branchés chacun sur une phase d'un départ triphasé présenteront des similitudes négatives deux à deux.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Avantageusement, le procédé selon un premier aspect de l'invention comprend en outre, avant l'étape de détermination de la similitude entre chaque mesure de tension de chaque compteur de la pluralité de compteurs, une étape de prétraitement de la mesure de la tension effectuée par chaque compteur sur la période de mesure.

Ainsi, le fonctionnement du procédé est amélioré en s'assurant que les données sont purgées de tout ou partie des mesures susceptibles de nuire à la pertinence des résultats obtenus, par exemple en supprimant la composante due à des variations de tension au niveau du transformateur.

Avantageusement, l'étape de regroupement des couples de compteurs n'est effectuée que sur les couples de compteurs présentant une similitude inférieure à - 0,2.

Ainsi, lorsque la similitude mesurée entre deux compteurs est trop élevée, le procédé ne tient pas compte du couple formé par ces deux compteurs, ce qui améliore les résultats obtenus par le procédé selon un premier aspect de l'invention.

Avantageusement, l'étape de regroupement comprend, pour chaque couple de compteurs:
- lorsque les deux compteurs dudit couple de compteurs n'appartiennent à aucun groupe, une sous-étape de création d'un groupe et d'association des deux compteurs audit groupe ;
- lorsque l'un des deux compteurs dudit couple de compteurs est déjà associé à un groupe, une sous-étape d'association du compteur non encore associé à un groupe audit groupe ;
- lorsque les deux compteurs dudit couple de compteurs sont déjà associés à deux groupes différents, une sous-étape de fusion desdits deux groupes.

Ainsi, le regroupement permet d'associer chaque groupe à un départ triphasé du réseau et donc à un transformateur du réseau.

Avantageusement, l'étape de regroupement comprend une première sous-étape de classement des couples de compteurs de la similitude de la plus négative à la moins négative et, pour chaque couple de compteurs et dans l'ordre de leur classement :
- lorsque les deux compteurs dudit couple de compteurs n'appartiennent à aucun groupe, une sous-étape de création d'un groupe et d'association des deux compteurs audit groupe ;
- lorsque l'un des deux compteurs dudit couple de compteurs est déjà associé à un groupe, une sous-étape d'association du compteur non encore associé à un groupe audit groupe ;
- lorsque les deux compteurs dudit couple de compteurs sont déjà associés à deux groupes différents, une sous-étape de fusion desdits deux groupes s'il existe au moins un autre couple de compteurs présentant une similitude négative et dont les deux compteurs sont associés aux mêmes deux groupes.

La sous-étape de classement présente au début de l'étape de regroupement permet d'améliorer la fiabilité dudit regroupement. De plus, le fait de ne fusionner deux groupes que s'il existe deux liens entre ces deux groupes permet d'améliorer encore la fiabilité du regroupement.

Avantageusement, la distance entre deux compteurs est égale à la valeur absolue de la similitude entre les deux compteurs lorsque ladite similitude est négative et la valeur nulle lorsque ladite similitude est positive, et, pour chaque groupe, le procédé comprend une étape de création de trois sous-groupes, chaque sous-groupe étant construit de sorte que la distance moyenne entre deux compteurs de sous-groupes différents soit la plus grande possible et que la distance moyenne entre deux compteurs appartenant au même sous-groupe soit la plus faible possible, de préférence nulle, chaque sous-groupe correspondant à une phase du départ triphasé associé au groupe considéré.

Ainsi, il est possible d'associer chaque compteur à une phase d'un départ triphasé.

Avantageusement, de manière alternative, la distance entre deux compteurs est égale à la valeur absolue de la similitude entre les deux compteurs lorsque ladite similitude est négative et la valeur nulle lorsque ladite similitude est positive, et dans lequel, pour chaque groupe, le procédé comprend une étape de mise en œuvre d'un algorithme de clustering de sorte à obtenir trois clusters de compteurs, chaque cluster correspondant à une phase du départ triphasé associé au groupe considéré.

Ainsi, comme précédemment, il est possible d'associer chaque compteur à une phase d'un départ triphasé.

Avantageusement, de manière encore alternative, pour chaque groupe, le procédé comprend :
- pour chaque compteur du groupe, une étape de détermination des deux autres compteurs du groupe avec lesquels le compteur considéré présente les similitudes les plus négatives, les trois compteurs ainsi déterminés formant une triplette associée à un score de sorte à obtenir une pluralité de triplettes, les compteurs d'une triplette présentant toujours une similitude négative deux à deux ;
- une étape de détermination de la triplette présentant le score le plus élevé, dite triplette de référence ;
- une étape d'association d'un sous-groupe à chaque compteur de la triplette de référence de sorte à obtenir trois sous-groupes ;
puis pour chaque compteur du groupe n'appartenant pas à la triplette de référence, le procédé comprend :
- lorsque le compteur présente une similitude négative avec deux et seulement deux des trois compteurs de la triplette de référence, une étape d'association dudit compteur au sous-groupe associé au compteur de la triplette de référence avec lequel la similitude est positive ou nulle ;
- sinon, lorsque le compteur a une similitude négative avec au moins deux autres compteurs associés à deux des trois sous-groupes :
   ▪ pour chaque sous-groupe parmi les trois sous-groupes, une sous-étape de détermination du compteur associé audit sous-groupe avec lequel le compteur considéré à la similitude la plus faible, dit compteurs intermédiaire, de sorte à obtenir un compteur intermédiaire par sous-groupe ;
   ▪ si le compteur considéré présente une similitude négative avec chaque compteur intermédiaire, alors une sous-étape de classification dudit compteur comme étant difficile à classer, ce dernier n'étant alors associé à aucun sous-groupe ;
   ▪ sinon, une sous-étape d'association du compteur considéré au sous-groupe associé au compteur intermédiaire avec lequel le compteur considéré présente une similitude positive ou nulle ;
- sinon, une étape de classification dudit compteur comme étant difficile à classer, ce dernier n'étant alors associé à aucun sous-groupe.

Ainsi, comme précédemment, il est possible d'associer chaque compteur à un sous-groupe et donc à une phase d'un départ triphasé, chaque phase étant elle-même associée à un sous-groupe.

Un deuxième aspect non revendiqué de l'invention concerne un procédé de détermination de la topologie d'une pluralité de compteurs d'un départ triphasé, ledit départ triphasé comprenant trois phases, chaque compteur de la pluralité de compteurs étant connecté à une et une seule phase du départ triphasé. Le procédé selon un deuxième aspect de l'invention comprend :
- pour chaque compteur de la pluralité de compteurs, une étape de détermination des deux autres compteurs de la pluralité de compteurs avec lesquels le compteur considéré présente les similitudes les plus négatives, les trois compteurs ainsi déterminés formant une triplette associée à un score de sorte à obtenir une pluralité de triplettes, les compteurs d'une triplette présentant toujours une similitude négative deux à deux ;
- une étape de détermination d'une distance entre chacune des triplettes de la pluralité de triplettes, ladite distance entre deux triplettes étant fonction des similitudes entre les compteurs de chacune des deux triplettes ;
- une étape de détermination de la triplette ayant le meilleur score, dite triplette de référence ;
- une étape de connexion à de la triplette la plus proche de la triplette de référence à ladite triplette de référence de sorte à former deux triplettes connectées ;
- puis, une étape de détermination, parmi les triplettes non encore connectées, de la triplette la plus proche d'une triplette connectée et une étape connexion de ladite triplette non encore connectée à la triplette connectée dont elle est la plus proche, ces deux étapes étant répétées jusqu'à que l'ensemble des triplettes soit connecté.

Ainsi, il est possible de connaitre la topologie au niveau d'un départ triphasé donné, c'est-à-dire la façon dont les compteurs sont connectés entre eux et au niveau des phases dudit départ triphasé. On entend par triplette connecté le fait que chaque phase de la première triplette connectée est associée à une phase de la deuxième triplette connectée.

Un troisième aspect non revendiqué de l'invention concerne un procédé de détermination de la topologie d'un réseau comprenant une pluralité de compteurs et au moins un transformateur, chaque transformateur comprenant au moins un départ triphasé, chaque départ triphasé comprenant trois phases, et chaque compteur étant connecté à une et une seule phase. Le procédé selon un troisième aspect de l'invention comprend :
- pour chaque compteur de la pluralité de compteurs, une étape de détermination des deux autres compteurs de la pluralité de compteurs avec lesquels le compteur considéré présente les similitudes les plus négatives, les trois compteurs ainsi déterminés formant une triplette associée à un score de sorte à obtenir une pluralité de triplettes, les compteurs d'une triplette présentant toujours une similitude négative deux à deux ;
- une étape de détermination d'une distance séparant les triplettes deux à deux, la distance entre deux triplettes étant fonction des similitudes entre les compteurs de chacune des deux triplettes ;
- une étape de connexion des triplettes comprenant :
   ▪ une sous-étape de détermination, des deux triplettes les plus proche l'une de l'autre et non encore connectées entre elles ;
   ▪ une sous-étape de connexion des deux triplettes ainsi déterminées
un ensemble de triplettes connectées formant un groupe, les sous-étapes de l'étape de connexion des triplettes étant répétées jusqu'à obtenir un nombre de groupes égal à une valeur prédéterminée.

Ainsi, un procédé selon l'invention permet, en utilisant les mêmes principes que le procédé selon un premier aspect de l'invention, de réaliser une topologie complète du réseau à partir de la mise en place de triplettes de compteurs.

Avantageusement, le procédé selon un troisième aspect de l'invention comprend, après l'étape de détermination des deux autres compteurs de la pluralité de compteurs avec lesquels le compteur considéré présente les similitudes les plus négatives, une étape de tri des triplettes obtenues de sorte que les triplettes présentant un score en dessous d'une valeur seuil prédéterminée ne soient pas prises en compte.

Ainsi, ce tri évite que des triplettes ayant un score faible ne conduisent à fusionner deux groupes qui n'auraient pas dû l'être.

Un quatrième aspect de l'invention concerne un dispositif électronique selon la revendication 9..

Un cinquième aspect de l'invention non revendiqué concerne un programme d'ordinateur comprenant des instructions qui conduisent le dispositif selon un quatrième aspect de l'invention à exécuter les étapes du procédé selon un premier aspect, un deuxième aspect ou un troisième aspect de l'invention.

Un sixième aspect de l'invention non revendiqué concerne un support lisible par ordinateur, sur lequel est enregistré le programme d'ordinateur selon un cinquième aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un réseau électrique auquel peut être appliqué un procédé selon un premier, un deuxième ou un troisième aspect de l'invention.
- La figure 2 montre un ordinogramme d'un mode de réalisation d'un procédé selon un premier aspect de l'invention.
- La figure 3 montre une représentation schématique du résultat obtenu avec un procédé selon un premier aspect de l'invention.
- La figure 4 montre un ordinogramme d'un mode de réalisation d'un procédé selon un deuxième aspect de l'invention non revendiqué.
- La figure 5 montre une représentation schématique d'une partie des étapes d'un procédé selon un deuxième aspect de l'invention non revendiqué.
- La figure 6 montre un ordinogramme d'un mode de réalisation d'un procédé selon un troisième aspect de l'invention non revendiqué.
- La figure 7 montre une représentation schématique d'une partie des étapes d'un procédé selon un troisième aspect de l'invention non revendiqué.
- La figure 8 montre une représentation schématique d'un mode de réalisation d'un dispositif selon un quatrième aspect de l'invention.

### DESCRIPTION DETAILLEE D'AU MOINS UN MODE DE REALISATION DE L'INVENTION

Sauf précision contraire, un même élément apparaissant sur des figures différentes présente une référence unique.

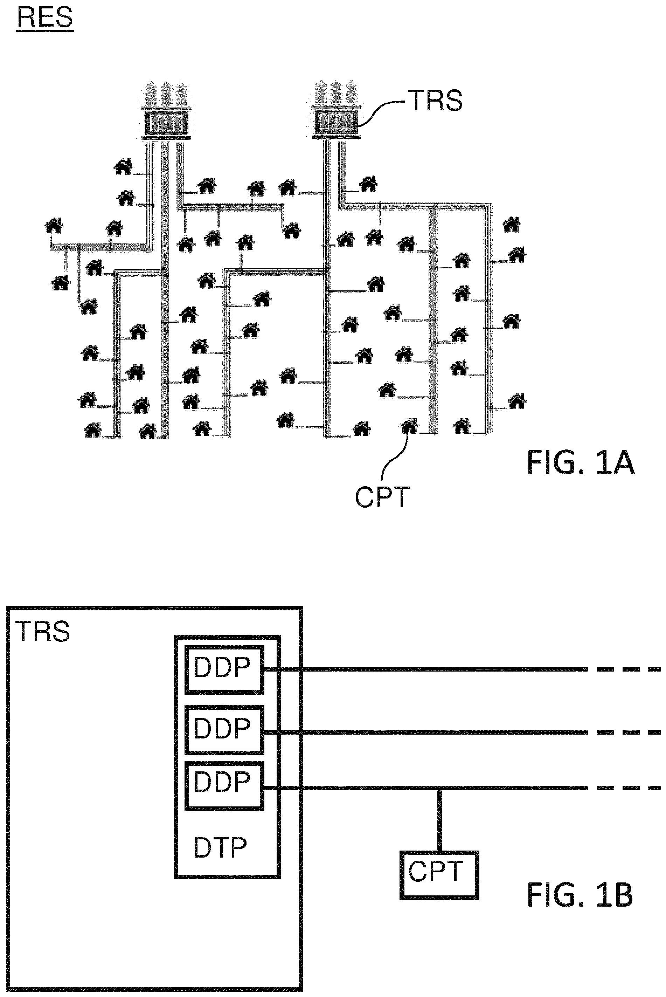

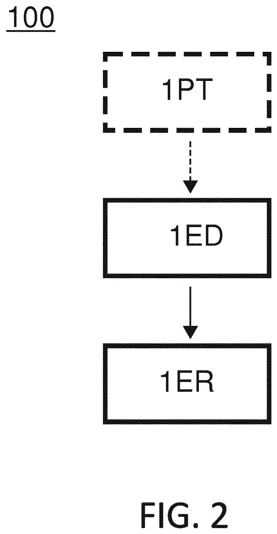

Un premier mode de réalisation d'un premier aspect de l'invention illustré aux figures 1 à 3 concerne un procédé 100 d'association de chaque compteur CPT d'une pluralité de compteurs CPT à un départ triphasé DTP d'un transformateur TRS parmi au moins un transformateur TRS, de préférence parmi une pluralité de transformateurs TRS, chaque transformateur TRS comprenant au moins un départ triphasé DTP, chaque départ triphasé DTP comprenant trois phases DDP, et chaque compteur CPT étant connecté à une et une seule phase DDP.

Le procédé 100 comprend une étape 1ED de détermination de la similitude entre chaque mesure de tension de chaque compteur CPT de la pluralité de compteurs CPT de sorte à former une pluralité de couples de compteurs CPT, chaque mesure de tension se faisant sur une période dite période de mesure, chaque couple de compteurs CPT étant associé à une similitude. La similitude peut par exemple être une corrélation telle qu'une corrélation de Pearson.

Dans un mode de réalisation, la similitude est déterminée par un calcul de coefficients de régression. Pour cela, pour chaque compteur CPT_{N}, on met en œuvre une étape de détermination de la tension V_{N} du compteur CPT_{N} à partir d'une combinaison linéaire des tensions et/ou des puissances des autres compteurs CPT, le coefficient associé à chaque compteur représentant alors la similitude entre le compteur CPT_{N} et le compteur associé au coefficient. Ainsi, soit un compteur CPTi associé à la tension *Vᵢ*, on détermine les coefficients *Kⱼ* associé au compteur *j* ≠ *i,* tels que : ${V}_{i} = {\sum }_{j} {K}_{j} \times {V}_{j}$

La similitude entre le compteur CPTᵢ et le compteur CPTⱼ est donnée par la valeur de *Kⱼ.*

Dans un mode de réalisation, la similitude est obtenue en deux temps :
- dans un premier temps, on calcule une corrélation, par exemple une corrélation de Pearson entre chaque compteur de la pluralité de compteurs ;
- dans un deuxième temps, on regroupe les compteurs par corrélation positive en ensemble, ledit regroupement pouvant être effectué par une méthode de clustering, par exemple une méthode dite *« affinity propagation » ;*
- dans un troisième temps, chaque compteur CPTᵢ étant associé la tension *Vᵢ*, on détermine les coefficients *Kⱼ* associé au compteur *j* ≠ *i*, tels que : ${V}_{i} = {\sum }_{j} {K}_{j} \times {V}_{j}$ *Kⱼ* étant imposé comme égal à zéro lors de la régression lorsque les compteurs CPTᵢ et CPTⱼ appartienne au même ensemble.

La similitude entre le compteur CPTᵢ et le compteur CPTⱼ est donnée par la valeur de *Kⱼ*. Autrement dit, la similitude est nulle lorsque deux compteurs appartiennent au même ensemble et a une valeur donnée par la régression linéaire autrement. L'avantage de cette définition de la similitude est qu'elle permet d'obtenir, à l'issue de l'étape 1ER de regroupement des couples de compteurs CPT présentant une similitude négative en fonction de leur similitude, non seulement un regroupement par départ triphasé comme avec les autres définitions de la similitude présentées plus haut, mais également un regroupement par départ de phase.

Dans un mode de réalisation, la similitude entre deux compteurs est obtenue par un calcul de la matrice des corrélations partielles, cette matrice pouvant par exemple être obtenue en inversant la matrice de covariance. Ce mode de calcul de la similitude a pour avantage de ne garder que les liens remarquables entre compteurs: chaque compteur n'est relié qu'à ceux permettant de décrire ses variations. Lorsque deux compteurs ne sont pas liés (lien égal à zéro dans la matrice), leur similitude est nulle. Lorsque deux compteurs sont liés, leur similitude est égale à ce lien. Dans un exemple de réalisation, ce calcul est effectué en forçant la matrice à être creuse (c'est-à-dire en augmentant le nombre de zéros lors de l'estimation de la matrice), de sorte à diminuer le nombre de lien entre compteurs (par exemple à l'aide d'un estimateur GraphicalLasso), et donc à avoir plus de similitudes égales à zéro.

De manière plus générale, une similitude peut être définie comme un niveau de ressemblance entre deux signaux, qui peut être calculé uniquement à partir de ces deux signaux (par ex. corrélation ou covariance), ou en tenant compte des autres signaux également (par ex. coefficient de régression ou corrélation partielle). A l'issue de cette étape, chaque couple qu'il est possible de faire avec les compteurs CPT de la pluralité de compteurs CPT est associé à une similitude, ladite similitude étant calculée entre les tensions mesurées au niveau de chaque compteur CPT dudit couple. Une matrice de toutes les similitudes entres les compteurs deux à deux est ainsi obtenue. Autrement dit, chaque compteur CPT mesure la tension à intervalles réguliers et enregistre l'évolution temporelle de cette tension et cette mesure est utilisée pour calculer la similitude. Dans la suite, l'évolution de la tension sur la période de mesure au niveau d'un compteur CPT sera appelée mesure de la tension du compteur CPT. Ainsi, une mesure de la tension comporte une pluralité de points, chaque point correspondant à une valeur de la tension en un instant donné. De même, la similitude entre deux compteurs CPT doit être comprise comme la similitude calculée entre la tension mesurée au niveau desdits compteurs CPT pour une période donnée, dite période de mesure. Pour cette raison dans la suite, la similitude entre la mesure de tension effectuée par un premier compteur CPT et la mesure de la tension effectuée par un deuxième compteur CPT sera également appelée similitude entre le premier compteur CPT et le deuxième compteur CPT par souci de concision.

Le procédé 100 comprend également une étape 1 ER de regroupement des couples de compteurs CPT présentant une similitude négative de sorte à former une pluralité de groupes, chaque groupe étant associé à un départ triphasé DTP. Autrement dit, seuls sont pris en compte pour l'étape 1ER de regroupement les couples qui ont une similitude inférieure ou égale à zéro, de préférence inférieure à -0,2. Cela permet de ne pas prendre en compte les couples peu discriminants pour la détermination de la topologie. En effet, il est « facile » de trouver des similitudes positives, même sur des départs différents (car les façons de consommer peuvent être similaires), alors qu'il est plus rare de trouver des similitudes négatives entre deux départs. Comme détaillé dans la suite, cette étape de regroupement peut être effectuée de plusieurs manières.

Dans un mode de réalisation, lorsque l'on connait le nombre de départs triphasés, il est possible de réaliser le regroupement à l'aide d'une méthode de clustering, par exemple une méthode de type kₘₑₐₙₛ. Lorsque le nombre de départ triphasé n'est pas connu, il est possible de réaliser le groupement à l'aide d'une méthode ne nécessitant pas de connaître le nombre de groupes en avance comme une méthode dite « *affinity propagation* », cette dernière permettant de déterminer le nombre de groupes optimal. Autrement dit, l'étape de regroupement ne nécessite pas obligatoirement de connaissance préalable du nombre de départs triphasés présent sur le réseau. On notera que, de manière générale, lorsqu'on cherche à rapprocher les compteurs présentant des similitudes négatives, on pourra utiliser un algorithme de clustering avec comme distance la valeur des similitudes modifiées de sorte à ne garder que les valeurs absolues des valeurs négatives, les valeurs positives étant supprimées. De même, lorsque qu'on cherche à grouper les compteurs présentant des similitudes positives, on pourra ne garder que les valeurs positives.

Dans un mode de réalisation, l'étape 1 ER de regroupement comprend, pour chaque couple de compteurs :
- lorsque les deux compteurs dudit couple de compteurs n'appartiennent à aucun groupe, une sous-étape de création d'un groupe et d'association des deux compteurs audit groupe ;
- lorsque l'un des deux compteurs dudit couple de compteurs est déjà associé à un groupe, une sous-étape d'association du compteur non encore associé à un groupe audit groupe ;
- lorsque les deux compteurs dudit couple de compteurs sont déjà associés à deux groupes différents, une sous-étape de fusion desdits deux groupes.

Ainsi, il est possible d'associer chaque compteur CPT d'un groupe à un départ triphasé DTP, et par voie de conséquence au transformateur TRS comprenant ledit départ triphasé DTP. Cependant, bien que simple d'implémentation, cette méthode de regroupement peut dans certains cas conduire à attribuer un compteur CPT à un mauvais groupe et donc à un mauvais départ triphasé DTP.

Les résultats obtenus avec la méthode précédemment décrite peuvent être améliorés en effectuant un classement des compteurs CPT. Plus précisément, dans un mode de réalisation alternatif, l'étape 1ER de regroupement comprend une première sous-étape de classement des couples de compteurs CPT de la similitude la plus négative à la moins négative. Elle comprend également pour chaque couple de compteurs CPT et dans l'ordre de leur classement :
- lorsque les deux compteurs CPT dudit couple n'appartiennent à aucun groupe, une sous-étape de création d'un groupe et une sous-étape d'association des deux compteurs CPT audit groupe ;
- lorsque l'un des deux compteurs CPT dudit couple est déjà associé à un groupe, une sous-étape d'association du compteur CPT non encore associé à un groupe audit groupe ;
- lorsque les deux compteurs CPT dudit couple sont déjà associés à deux groupes différents, une étape de fusion desdits deux groupes s'il existe au moins un autre couple de compteurs CPT présentant une similitude négative et pour laquelle les deux compteurs CPT dudit couple sont associés aux mêmes deux groupes (c'est-à-dire que si le premier compteur CPT du couple considéré appartient à un premier groupe et que le deuxième compteur CPT du couple considéré appartient à un deuxième groupe, le premier et le deuxième groupe ne seront fusionnés que s'il existe un deuxième couple de compteurs présentant une similitude négative et dont un compteur appartient au premier groupe et un autre compteur appartient au deuxième groupe) .

Ainsi, il est possible d'associer chaque compteur CPT d'un groupe à un départ triphasé DTP, et par voie de conséquence au transformateur TRS comprenant ledit départ triphasé DTP.

Dans un mode de réalisation, le procédé 100 selon un premier aspect de l'invention comprend, avant l'étape 1 ED de détermination de la similitude entre chaque mesure de tension de chaque compteur CPT de la pluralité de compteurs CPT, une étape 1PT de prétraitement de la mesure de la tension effectuée par chaque compteur CPT sur la période de mesure.

Dans un mode de réalisation, l'étape 1PT de prétraitement comprend une sous-étape de filtrage fréquentiel des mesures de la tension. Par exemple, le filtre peut comprendre un filtre passe-bande ne conservant qu'une gamme de fréquences donnée. Dans un autre exemple, le filtre peut être un filtre passe-haut de sorte à ne conserver que les hautes fréquences et ainsi supprimer les variations journalières. On pourra par exemple employer un filtre de Butterworth.

Dans un mode de réalisation, l'étape 1PT de prétraitement comprend une sous-étape de suppression des mesures de la tension lorsque ces dernières sont nulles durant un intervalle de temps donné, par exemple sur une journée.

Dans un mode de réalisation, l'étape 1PT de prétraitement comprend une sous-étape de suppression des points dans les mesures s'écartant anormalement des autres points de la même mesure, dites données aberrantes (ou *outliers* en anglais), par exemple les points qui représentent une valeur qui s'éloigne de la moyenne de plus de 3 écarts-types. Lorsque plusieurs sous-étapes de prétraitement sont effectuées, la sous-étape de suppression des données aberrantes est, de préférence, effectuée en premier.

Lorsque des données sont supprimées lors du prétraitement, le calcul de similitude peut être fait sur les données restantes (et donc sur une période de mesure modifiée correspondant auxdites données restantes) ou bien alors les données supprimées peuvent être substituées à de nouvelles données obtenues par interpolations comme cela sera décrit dans la suite.

Dans un mode de réalisation, l'étape 1PT de prétraitement comprend une sous-étape de synchronisation des mesures, par exemple en utilisant une méthode de cross-corrélation. Une telle méthode est connue de l'homme du métier et ne sera donc pas décrite ici.

Dans un mode de réalisation, l'étape 1PT de prétraitement comporte une sous-étape d'interpolation de sorte que le nombre de points par mesure soit identique pour l'ensemble des mesures de la grandeur électrique de référence, par exemple par interpolation linéaire. Cette interpolation permet également de compléter d'éventuelles données manquantes.

Dans un mode de réalisation, l'étape 1PT de prétraitement comprend une sous-étape de détermination d'une sous-période, dite sous-période améliorée, ladite sous-période comprenant une ou plusieurs parties de la période de mesure, le calcul de similitude entre les différents compteurs étant alors effectué sur ladite sous-période améliorée. Cette sous-période améliorée peut par exemple correspondre à une période durant laquelle le réseau est plus déséquilibré. On entend par réseau déséquilibré le fait que chaque phase d'un départ triphasé consomme des quantités de courant différentes et qu'un courant de neutre important est créé. Une période de déséquilibre peut être choisie comme la période durant laquelle la consommation électrique est plus importante que la moyenne (donc plus de chance d'avoir un déséquilibre important), par exemple lors de la pointe du soir, ou le midi en présence de panneaux solaires. Il est également possible de déterminer cette période de déséquilibre en mesurant toutes les tensions en même temps et choisissant les moments ou l'écart type est le plus important.

Dans un mode de réalisation, l'étape 1PT de prétraitement comprend une sous-étape de dérivation du signal mesurée par chaque compteur, la dérivée pouvant être une dérivée d'ordre un ou d'ordre supérieur. Cela permet notamment de mesurer les similitudes concernant les variations de tension et non plus la tension elle-même.

Dans un mode de réalisation, l'étape 1PT de prétraitement comprend une sous-étape de suppression de la composante due à des variations au niveau du ou des transformateurs TRS. Par exemple, la sous-étape de suppression de la composante due à des variations au niveau du ou des transformateurs TRS peut être réalisée en soustrayant la tension mesurée au niveau du transformateur. Cette composante peut être mesurée par un concentrateur situé au niveau de chaque transformateur TRS. A noter que pour un transformateur TRS donné, la tension est la même pour tous les départs triphasés DTP du transformateur TRS considéré, mais peut-être différente pour chacune des phases DDP (i.e. les premières phases DDP des départs triphasés DTP vont avoir la même tension, les deuxièmes phases DDP des départs triphasés DTP vont avoir la même tension et les troisièmes phases DDP des départs triphasés DTP vont avoir la même tension). La tension d'un transformateur TRS pourra par exemple être approximée comme étant égale à la tension moyennée sur les trois phases DDP de chaque départ triphasé DTP (ou bien d'un départ triphasé DTP de référence) puis soustraite à la tension mesurée sur chaque compteur CPT connecté au transformateur TRS considéré. Cela suppose cependant que chaque compteur CPT a déjà été associé à un transformateur TRS (ce qui est le cas lorsque l'on s'intéresse à un seul transformateur TRS) ce qui n'est pas toujours possible.

Dans un autre exemple, lorsque la tension ne peut pas être mesurée au niveau de chaque transformateur TRS, la sous-étape de suppression de la composante due à des variations au niveau du ou des transformateurs TRS peut être réalisée en moyennant toutes les tensions mesurées au niveau des compteurs CPT pour trouver leur base commune, puis en soustrayant de chaque tension la composante parallèle à cette base commune. Autrement dit, la tension au niveau d'un transformateur TRS est approximée par la moyenne des tensions mesurées au niveau des compteurs CPT rattachés audit transformateur TRS, puis cette tension est soustraite à la tension mesurée au niveau de chacun des compteurs CPT rattachés audit transformateur TRS. Dans un autre exemple, la soustraction de la base commune pourra également se faire pour chaque tension, en soustrayant la projection de ladite tension sur ladite base commune (en utilisant par exemple le produit scalaire). Dans un autre exemple encore, la base commune est directement soustraite à chaque tension.

Dans un autre exemple, la sous-étape de suppression de la composant due à des variations au niveau du ou des transformateurs TRS peut être réalisée en réalisant une analyse des composantes principales ou une analyse en composante indépendante et en supprimant le ou les premiers vecteurs. Autrement dit, une analyse en composante principales sur toutes les tensions d'un transformateur TRS est effectuée de sorte à obtenir les axes principaux, les premiers axes étant les plus importants. Si l'influence du transformateur TRS est importante, et comme il impacte toutes les tensions mesurées au niveau des compteurs CPT, alors cette tension devrait se retrouver dans le premier axe.

Une fois chaque compteur CPT associé à un départ triphasé DTP, il peut être intéressant de déterminer l'association entre chaque compteur CPT et chaque phase DDP, cette détermination se faisant par départ triphasé DTP.

Pour cela, dans un mode de réalisation, la distance entre deux compteurs CPT est définie comme égale à la valeur absolue de la similitude entre les deux compteurs CPT considérés lorsque ladite similitude est négative et la valeur nulle lorsque ladite similitude est positive. De plus, pour chaque groupe (autrement dit les compteurs CPT associés à un départ triphasé DTP donné), le procédé 100 comprend une étape de création de trois sous-groupes, les sous-groupes étant construits de sorte que la distance moyenne entre deux compteurs CPT de sous-groupes différents soit la plus grande possible et que la distance moyenne entre deux compteurs CPT appartenant au même sous-groupe soit la plus faible possible, chaque sous-groupe correspondant à une phase DDP du départ triphasé DTP associé au groupe considéré. Ainsi, en fonction de l'appartenance d'un compteur à un sous-groupe donnée, il est possible d'associer ledit compteur à une phase DDP d'un départ triphasé DTP d'un transformateur TRS. De manière alternative, le regroupement des compteurs en trois sous-groupes pourra être effectué à l'aide d'une méthode de clustering.

Dans un mode de réalisation alternatif, la distance entre deux compteurs CPT est définie comme égale à la valeur absolue de la similitude entre les deux compteurs CPT considérés lorsque ladite similitude est négative et la valeur nulle lorsque ladite similitude est positive. De plus, le procédé 100 comprend, pour chaque groupe (autrement dit les compteurs CPT associés à un départ triphasé DTP donné), une étape de mise en œuvre d'un algorithme de clustering de sorte à obtenir trois clusters de compteurs, chaque cluster correspondant à une phase DDP du départ triphasé DTP associé au groupe considéré. L'algorithme de clustering peut par exemple être l'algorithme de Kmeans ou de type cartes auto-organisatrices (par exemple des cartes de Kohonen).

Dans un mode de réalisation alternatif, pour chaque groupe (autrement dit les compteurs CPT associés à un départ triphasé DTP donné), le procédé 100 comprend pour chaque compteur CPT du groupe, une étape de détermination des deux autres compteurs CPT du groupe avec lesquels le compteur CPT considéré présente les similitudes les plus négatives, les trois compteurs ainsi déterminés formant une triplette associée à un score, les compteurs d'une triplette présentant toujours une similitude négative deux à deux. Ainsi, une pluralité de triplettes est obtenue, chaque triplette étant associée à un score. Il est important de noter qu'un compteur peut appartenir à plusieurs triplettes. Le score peut par exemple être égal à la valeur absolue de la moyenne des similitudes entre chaque compteur CPT de la triplette considérée. Le procédé 100 comprend ensuite, une étape de détermination de la triplette présentant le score le plus élevé, dite triplette de référence.

Le procédé 100 comprend également une étape d'association d'un sous-groupe à chaque compteur CPT de la triplette de référence. Cette association va permettre d'associer les autres compteurs CPT du groupe (ceux n'appartenant pas à la triplette de référence), à chaque sous-groupe et donc à une phase DDP du départ triphasé DTP. Cette association va se faire en fonction des similitudes entre les compteurs CPT de la triplette de la triplette de référence et les compteurs CPT à associer. Pour cela, il convient de distinguer deux situations. Lorsque le compteur CPT à associer présente une similitude négative avec deux et seulement deux des trois compteurs CPT de la triplette de référence, alors ledit compteur CPT est associé au sous-groupe associé compteur CPT de la triplette de référence avec lequel il présente la similitude la plus élevée.

Si cette première condition n'est pas remplie, lorsque le compteur a une corrélation négative avec au moins deux autres compteurs CPT associés à deux des trois sous-groupes, le procédé comprend, pour chaque sous-groupe parmi les trois sous-groupes, une sous-étape de détermination du compteur CPT associé audit sous-groupe avec lequel le compteur CPT considéré à la similitude la plus faible, dit compteur CPT intermédiaire, de sorte à obtenir un compteur CPT intermédiaire par sous-groupe. En effet, du fait des itérations précédentes, d'autres compteurs CPT que ceux de la triplette de référence sont déjà associés à un sous-groupe parmi les trois sous-groupes. De plus, il est possible de déterminer parmi ces compteurs CPT, celui qui présente la similitude la plus faible avec le compteur CPT que l'on cherche à associer, le compteur CPT ainsi déterminé devenant le compteur CPT intermédiaire pour le sous-groupe auquel il est associé. A l'issue de cette sous-étape, l'on dispose de trois compteurs CPT intermédiaires chacun de ces compteurs CPT intermédiaires étant associé à un sous-groupe parmi les trois sous-groupes. L'on dispose également de la similitude entre chacun de ces compteurs CPT intermédiaires et le compteur CPT que l'on cherche à associer. Le procédé comprend ensuite, si le compteur considéré présente une similitude négative avec chaque compteur CPT intermédiaire, une sous-étape de classification dudit compteur comme étant difficile à classer, ce dernier n'étant alors associé à aucun sous-groupe. En effet, si le compteur considéré présente une similitude négative avec les trois compteurs intermédiaire, alors il est préférable de mettre ce dernier de côté en utilisant par exemple une autre méthode pour lui attribuer une phase DDP. Une telle attribution sera facilité par le fait que, grâce au procédé selon la présente invention, le compteur mis de côté est associé à un groupe et donc à un départ triphasé. Si la précédente condition n'est pas remplie, c'est-à-dire que un et un seul des trois compteurs CPT de référence présente une similitude positive ou nulle avec le compteur considéré, le procédé comprend une sous-étape d'association du compteur CPT considéré au sous-groupe associé au compteur CPT intermédiaire avec lequel le compteur CPT considéré présente une similitude positive ou nulle.

Enfin, si aucune des conditions énoncées précédemment n'est remplie, le procédé comprend une étape de classification dudit compteur CPT comme étant difficile à classer, ce dernier n'étant alors associé à aucun sous-groupe. Le compteur CPT non associé pourra éventuellement être associé ultérieurement à l'aide d'une autre technique.

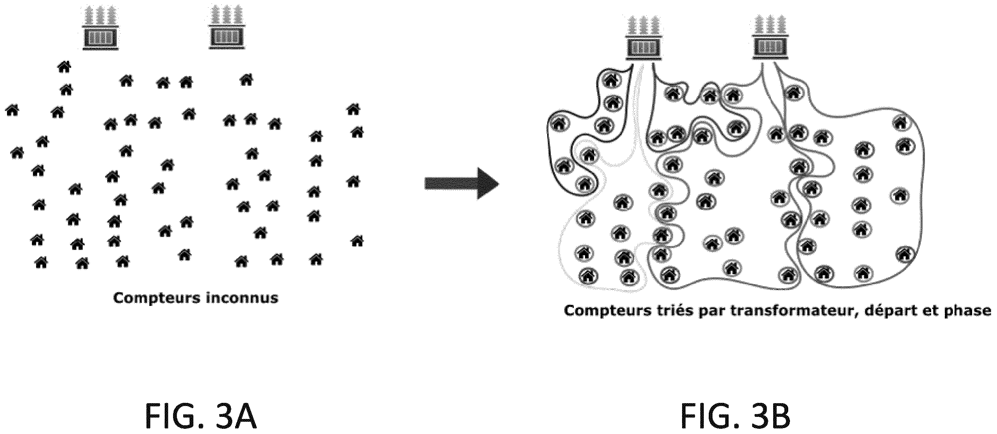

Comme illustré à la figure 3, le procédé selon un premier aspect de l'invention permet d'associer chaque compteur CTP à un départ triphasé DTP (voire à une phase DDP d'un départ triphasé DTP). Une fois qu'une telle association est connue, il peut être intéressant de connaître la topologie des compteurs CPT au niveau de chaque départ triphasé DPT, autrement dit comment les différents compteurs CPT sont connectés entre eux.

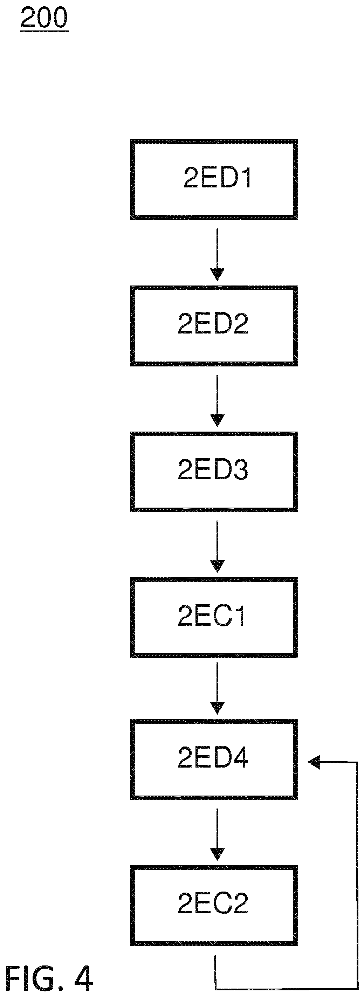

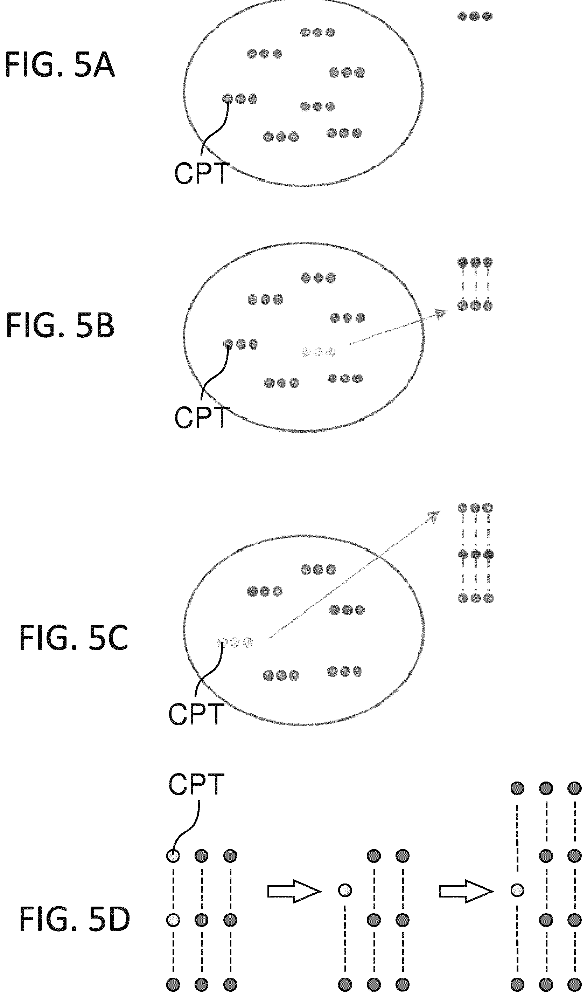

Pour cela, un mode de réalisation d'un deuxième aspect non revendiqué de l'invention illustré à la figure 4 et à la figure 5 concerne un procédé 200 de détermination de la topologie d'une pluralité de compteurs CPT d'un départ triphasé DTP. Il est intéressant de noter que dans le cas où plusieurs départs triphasés DTP sont présents, il est possible de mettre en œuvre ledit procédé pour chacun d'eux afin d'obtenir la topologie d'une partie du réseau ou du réseau dans son ensemble. Comme déjà détaillé auparavant, le départ triphasé DPT comprend trois phases DDP, chaque compteur CPT de la pluralité de compteurs CPT étant connecté à une et une seule phase DDP du compteur CPT triphasé. Le procédé 200 comprend tout d'abord, pour chaque compteur CPT de la pluralité de compteurs, une étape 2ED1 de détermination des deux autres compteurs CPT de la pluralité de compteurs CPT avec lesquels le compteur CPT considéré présente les similitudes les plus négatives, les trois compteurs CPT ainsi déterminés formant une triplette associée à un score. Comme déjà mentionné, le score peut par exemple être égal à la valeur absolue de la moyenne des similitudes entre chaque compteur CPT de la triplette considérée. Pour rappel, pour que trois compteurs CPT puissent former une triplette, lesdits compteurs CPT doivent présenter une similitude négative deux à deux. A l'issue de cette étape 2ED1, une pluralité de triplettes est obtenue, chacune étant associée à un score, et il ne reste donc plus qu'à les connecter afin de déterminer la topologie au niveau du départ triphasé DTP considéré.

Pour cela, le procédé 200 comprend une étape 2ED2 de détermination de la distance entre chacune des triplettes précédemment obtenues, ladite distance entre deux triplettes étant fonction des similitudes entre les compteurs de chacune des deux triplettes. Par exemple, pour trouver la distance, on commence par apparier les compteurs CPT des deux triplettes deux à deux selon leur phase DDP. Par exemple, en trouvant les trois paires de compteurs CPT qui sont positivement corrélées et qui maximisent la somme quadratique des trois corrélations. Une fois les trois paires trouvées, la distance peut être obtenue à partir de ces trois corrélations. Par exemple la est déterminée en calculant la valeur absolue de la moyenne des trois corrélations correspondant aux trois paires formées moins 1 (autrement dit :
*abs*(*moyenne*(*corrélations entre compteurs de chaque paire) -* 1))

Par exemple, dans le cas d'une triplette (a,b,c) et d'une triplette (d,e,f), les compteurs CPT sont tout d'abord appariés, en trouvant les trois paires de compteurs CPT qui sont positivement corrélées et qui maximisent la somme quadratique des trois corrélations.. Dans cet exemple, les trois paires ainsi obtenues sont (a,e), (b,d) et (c,f). Une fois les trois paires trouvées, la distance peut être obtenue à partir de ces trois corrélations. Par exemple, la distance entre ces deux triplettes est ensuite donnée par le calcul détaillé précédemment. Il est important de noter que lorsqu'un même compteur CPT appartient aux deux triplettes, la corrélation calculée entre ce compteur CPT est lui-même est égale à 1. Dans les exemples exposés ci-dessus, la similitude entre deux compteurs CPT est obtenue à l'aide d'une corrélation, mais d'autres méthodes pour le calcul de la distance entre deux triplettes peuvent être envisagées en fonction de la méthode utilisée pour la détermination de la similitude entre deux compteurs CPT.

Cette étape est suivie par une étape 2ED3 de détermination de la triplette ayant le meilleur score, dite triplette de référence (figure 5A). Cette triplette de référence va servir de point de départ pour mettre en place la topologie. Le procédé 200 comprend ensuite une étape 2EC1 de connexion à de la triplette la plus proche (par exemple selon la distance précédemment définie) de la triplette de référence à ladite triplette de référence de sorte à former deux triplettes connectées (figure 5B). Puis, pour chaque triplette non encore connectée, le procédé comprend une étape 2ED4 de détermination de la triplette la plus proche d'une triplette connectée et une étape 2EC2 de connexion de ladite triplette non encore connectée à la triplette connectée dont elle est la plus proche (figure 5C), ces deux étapes 2ED4, 2EC2 étant répétées jusqu'à que l'ensemble des triplettes soient connectées. A l'issue du procédé, on obtient donc la topologie des compteurs CPT au niveau du départ triphasé DTP considéré. On entend par triplette connectée le fait que chaque phase DDP de la première triplette connectée est associée à une phase de la deuxième triplette connectée. Autrement, lorsqu'une première triplette est connectée à une deuxième triplette, chaque compteur CPT de la première triplette est connecté à un compteur CPT de la deuxième triplette (ils sont donc connectés à une même phase). Comme cela a été présenté plus haut, chaque compteur CPT de la première triplette est apparié à un compteur CPT de la deuxième triplette lors de la détermination de la distance entre la première triplette et la deuxième triplette. De plus, comme cela a déjà été mentionné, un compteur peut appartenir à plusieurs triplettes. Dans ce cas, comme cela est illustré en figure 5D sur lequel chaque compteur est représenté par un nœud, lors de la connexion de deux triplettes ayant un compteur CPT commun, les deux nœuds correspondant à ce compteur CPT sont fusionnés pour ne former qu'un seul nœud, les connexions entre ce nœud et le nœud de la triplette précédente ou suivante étant adaptées en conséquence.

De manière avantageuse, l'étape 2ED1 de détermination des deux autres compteurs CPT de la pluralité de compteurs CPT avec lesquels le compteur CPT considéré présente les similitudes les plus négatives est précédée d'une étape de prétraitement telle que décrite dans le cadre du procédé selon un premier aspect de l'invention.

Dans le procédé 200 de détermination de la topologie d'une pluralité de compteurs CPT d'un départ triphasé DTP décrit précédent, afin d'obtenir la topologie d'un réseau, il importe d'abord d'associer chaque compteur CPT à un départ triphasé DTP (par exemple en mettant en œuvre un procédé 100 selon un premier aspect de l'invention) puis de déterminer la topologie, départ triphasé DTP par départ triphasé DTP à l'aide d'un procédé 200 selon un deuxième aspect de l'invention. Bien qu'une telle solution soit tout à fait envisageable et même parfois souhaitable (par exemple lorsque seule la topologie d'un ou plusieurs départs triphasés DTP particuliers importe), il peut être avantageux de disposer d'un procédé permettant d'associer chaque compteur CPT à un départ triphasé DTP tout en permettant de déterminer la topologie au niveau de chaque départ triphasé DTP, même dans le cas d'une pluralité de départs triphasés DTP.

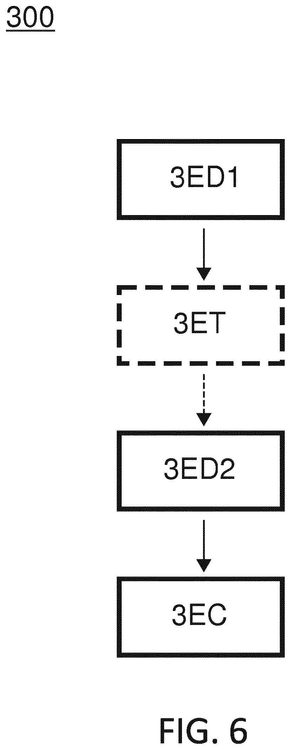

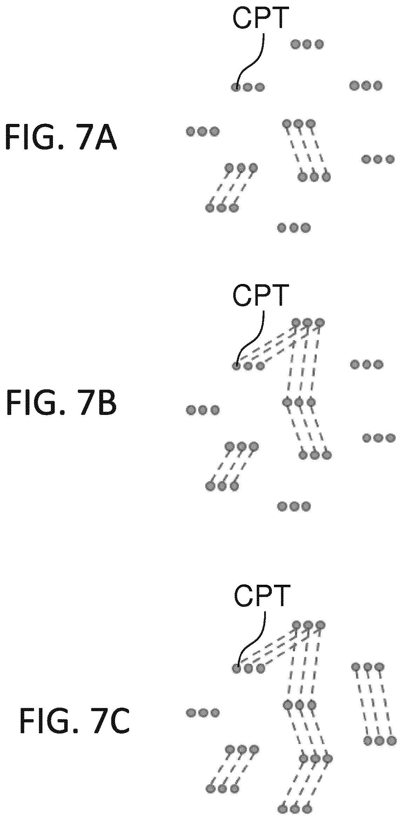

Pour cela, un mode de réalisation d'un troisième aspect non revendiqué de l'invention illustré à la figure 6 et à la figure 7 concerne un procédé 300 de détermination de la topologie d'un réseau. Le réseau comprend une pluralité de compteurs CPT et au moins un transformateur TRS, de préférence une pluralité de transformateurs TRS, chaque transformateur TRS comprenant au moins un départ triphasé DTP, chaque départ triphasé DTP comprenant trois phases DDP, et chaque compteur CPT étant connecté à une et une seule phase DDP.

Le procédé 300 comprend, pour chaque compteur CPT de la pluralité de compteurs CPT, une étape 3ED1 de détermination des deux autres compteurs CPT de la pluralité de compteurs CPT avec lesquels le compteur CPT considéré présente la similitude la plus négative, les trois compteurs CPT ainsi déterminés formant une triplette associée à un score. Comme déjà mentionné, le score peut par exemple être égal à la valeur absolue de la moyenne des similitudes entre chaque compteur CPT de la triplette considérée. Comme cela a déjà été rappelé, pour que trois compteurs CPT puissent former une triplette, lesdits compteurs CPT doivent présenter une similitude négative deux à deux.

Dans un mode de réalisation, le procédé 300 comprend ensuite une étape 3ET de tri des triplettes obtenues de sorte que les triplettes présentant un score en dessous d'une valeur seuil prédéterminée (par exemple un seuil égal à la valeur moyenne des scores moins l'écart type desdits scores) ne soient pas prises en compte. Cette étape de tri, bien que facultative, évite que des triplettes ayant un score faible ne conduisent à fusionner deux groupes qui n'auraient pas dû l'être.

Le procédé comprend ensuite une étape 3ED2 de détermination de la distance séparant les triplettes deux à deux. Enfin, comme illustré aux figures 7A, 7B et 7C, le procédé 300 comprend une étape 3EC de connexion des triplettes comprenant une sous-étape de détermination, des deux triplettes les plus proches l'une de l'autre et non encore connectées entre elles et une sous-étape de connexion des deux triplettes ainsi déterminées. Ainsi, un ensemble de triplettes connectées forme un groupe et les sous-étapes de l'étape de connexion des triplettes étant répétées jusqu'à obtenir un nombre de groupes égal à une valeur prédéterminée. La valeur prédéterminée est par exemple le nombre de départs triphasés DTP du réseau ou bien encore le nombre de transformateurs TRS du réseau si l'on souhaite grouper ensemble les départs de chaque transformateur. Ainsi, à l'issue du procédé, une pluralité de groupes de triplettes est obtenue, chaque groupe correspondant à un départ triphasé DTP ou à un transformateur TRS. De plus, les connexions des triplettes entre elles au sein d'un groupe donné permettent de connaître la topologie au niveau du départ triphasé DTP ou du transformateur TRS correspondant audit groupe.

Le mode de connexion des triplettes entre elles est identique au mode de connexion utilisé lors de la mise en œuvre d'un procédé 200 selon un deuxième aspect de l'invention. Autrement dit, lorsqu'une première triplette est connectée à une deuxième triplette, chaque compteur CPT de la première triplette est connecté à un compteur CPT de la deuxième triplette (ils sont donc connectés à une même phase). De plus, comme cela a déjà été mentionné, un compteur peut appartenir à plusieurs triplettes. Dans ce cas, comme cela est illustré en figure 5D sur lequel chaque compteur est représenté par un nœud, lors de la connexion de deux triplettes ayant un compteur CPT commun, les deux nœuds correspondant à ce compteur CPT sont fusionnés pour ne former qu'un seul nœud, les connexions entre ce nœud et le nœud de la triplette précédente ou suivante étant adaptées en conséquence.

Avantageusement, l'étape 3ED1 de détermination des deux autres compteurs CPT de la pluralité de compteurs CPT avec lesquels le compteur CPT considéré présente la similitude la plus négative est précédée d'une étape de prétraitement telle que décrite dans le cadre du procédé 100 selon un premier aspect de l'invention.

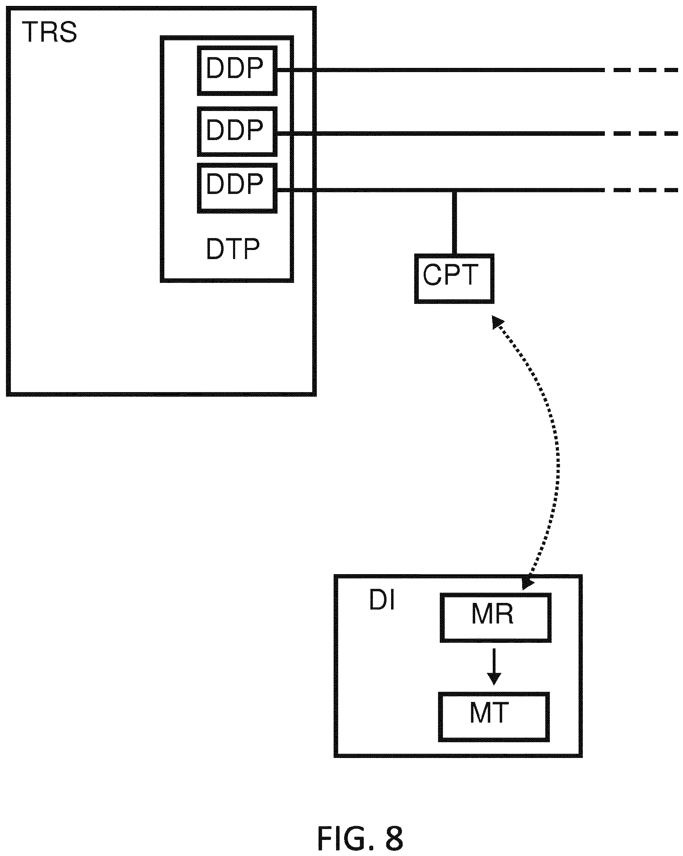

Un quatrième aspect de l'invention illustré en figure 8 concerne un dispositif DI permettant de mettre en œuvre un procédé selon un premier aspect, un deuxième aspect (non revendiqué) ou un troisième aspect (non revendiqué) de l'invention. Comme décrit précédemment, dans un réseau de distribution électrique, chaque transformateur TRS comprend au moins un départ triphasé DTP, chaque départ triphasé DTP comprend trois départs de phase DDP. Dans un mode de réalisation, le dispositif comporte un moyen de traitement MT, ledit moyen de traitement MT étant configuré de sorte que le dispositif est apte à mettre en œuvre un procédé selon un premier aspect, un deuxième aspect ou un troisième aspect de l'invention. Le moyen de traitement peut par exemple prendre la forme d'un processeur associé à une mémoire, d'un FPGA (*Field-Programmable Gate Array* en anglais ou circuit logique programmable) ou d'un ASIC *(Application-Specific Integrated Circuit* en anglais ou circuit intégré développé pour un client). Dans un mode de réalisation, chaque compteur CPT est apte à mesurer la tension au niveau dudit compteur CPT. Dans un mode de réalisation, le dispositif comporte des moyens MR pour recevoir les mesures effectuées au niveau de chaque compteur CPT à associer. Il peut s'agir d'une connexion filaire, par exemple une connexion Ethernet ou bien encore d'une connexion sans-fils, par exemple Wifi^{®} ou Bluetooth^{®}. Dans un mode de réalisation alternatif ou complémentaire, l'ensemble des mesures effectuées au niveau de chaque compteur CPT est centralisé au niveau d'un ou plusieurs serveurs, et le dispositif DI comprend alors de moyens pour recevoir les données correspondant auxdites mesures envoyées par lesdits serveurs.

## Revendications

1. Procédé (100) d'association de chaque compteur (CPT) d'une pluralité de compteurs (CPT) à un départ triphasé (DTP) d'un transformateur (TRS) parmi au moins un transformateur (TRS), chaque transformateur (TRS) comprenant au moins un départ triphasé (DTP), chaque départ triphasé (STP) comprenant trois phases (DDP), et chaque compteur (CPT) étant connecté à une et une seule phase (DDP) ; le procédé (100) comprenant :
- une étape (1ED) de détermination d'une similitude entre chaque mesure de tension de chaque compteur (CPT) de la pluralité de compteurs (CPT) de sorte à former une pluralité de couples de compteurs (CPT), chaque mesure de tension se faisant sur une période dite période de mesure, chaque couple de compteurs (CPT) étant associé à une similitude ;
la similitude entre deux signaux étant déterminée :
- à l'aide d'une fonction prenant :
∘ une valeur positive lorsque les deux signaux ont, sur la période prise en compte, une évolution globalement similaire ;
∘ une valeur négative lorsque les deux signaux ont, sur la période prise en compte, une évolution globalement opposée ;
∘ une valeur nulle, lorsque les deux signaux ont, sur la période prise en compte, une évolution globalement indépendante ;
- par un calcul de coefficients de régression ; ou
- par un calcul de matrice de corrélations partielles,
le procédé étant **caractérisé en ce qu'**il comprend en outre :
- une étape (1ER) de regroupement des couples de compteurs (CPT) présentant une similitude négative en fonction de leur similitude de sorte à former une pluralité de groupes, chaque groupe étant associé à un départ de triphasé (DTP).

2. Procédé selon la revendication précédente dans laquelle la fonction prenant une valeur positive lorsque les deux signaux ont, sur la période prise en compte, une évolution globalement similaire ; une valeur négative lorsque les deux signaux ont, sur la période prise en compte, une évolution globalement opposée ; et une valeur nulle, lorsque les deux signaux ont, sur la période prise en compte, une évolution globalement indépendante est une corrélation de Pearson.

3. Procédé (100) selon l'une des revendications précédentes comprenant en outre, avant l'étape (1ED) de détermination de la similitude entre chaque mesure de tension de chaque compteur (CPT) de la pluralité de compteurs (CPT), une étape (1PT) de prétraitement de la mesure de la tension effectuée par chaque compteur (CPT) sur la période de mesure.

4. Procédé (100) d'association selon l'une des revendications 1 à 3 dans lequel l'étape (1ER) de regroupement comprend, pour chaque couple de compteurs (CPT) :
- lorsque les deux compteurs (CPT) dudit couple de compteurs (CPT) n'appartiennent à aucun groupe, une sous-étape de création d'un groupe et d'association des deux compteurs (CPT) audit groupe ;
- lorsque l'un des deux compteurs (CPT) dudit couple de compteurs (CPT) est déjà associé à un groupe, une sous-étape d'association du compteur (CPT) non encore associé à un groupe audit groupe ;
- lorsque les deux compteurs (CPT) dudit couple de compteurs sont déjà associés à deux groupes différents, une sous-étape de fusion desdits deux groupes.

5. Procédé (100) d'association selon l'une des revendications 1 à 3 dans lequel l'étape (1ER) de regroupement comprend une première sous-étape de classement des couples de compteurs (CPT) de la similitude de la plus négative à la moins négative et, pour chaque couple de compteurs CPT et dans l'ordre de leur classement :
- lorsque les deux compteurs (CPT) dudit couple de compteurs CPT n'appartiennent à aucun groupe, une sous-étape de création d'un groupe et une sous-étape d'association des deux compteurs (CPT) audit groupe ;
- lorsque l'un des deux compteurs (CPT) dudit couple de compteurs (CPR) est déjà associé à un groupe, une sous-étape d'association du compteur (CPT) non encore associé à un groupe audit groupe ;
- lorsque les deux compteurs (CPT) dudit couple de compteurs (CPT) sont déjà associés à deux groupes différents, une sous-étape de fusion desdits deux groupes s'il existe au moins un autre couple de compteurs (CPT) présentant une similitude négative dont les deux compteurs (CPT) sont associés aux mêmes deux groupes.

6. Procédé (100) selon l'une des revendications précédentes dans lequel la distance entre deux compteurs (CPT) est égale à la valeur absolue de la similitude entre les deux compteurs (CPT) lorsque ladite similitude est négative et la valeur nulle lorsque ladite similitude est positive, et dans lequel, pour chaque groupe, le procédé comprend une étape de création de trois sous-groupes, chaque sous-groupe étant construit de sorte que la distance moyenne entre deux compteurs (CPT) de sous-groupes différents soit la plus grande possible et que la distance moyenne entre deux compteurs (CPT) appartenant au même sous-groupe soit la plus faible possible, chaque sous-groupe correspondant à une phase (DDP) du départ triphasé (DTP) associé au groupe considéré.

7. Procédé (100) selon l'une des revendications 1 à 5 dans lequel la distance entre deux compteurs (CPT) est égale à la valeur absolue de la similitude entre les deux compteurs (CPT) lorsque ladite similitude est négative et la valeur nulle lorsque ladite similitude est positive, et dans lequel, pour chaque groupe, le procédé comprend une étape de mise en œuvre d'un algorithme de clustering de sorte à obtenir trois clusters de compteurs (CPT), chaque cluster correspondant à une phase (DDP) du départ triphasé (DTP) associé au groupe considéré.

8. Procédé (100) selon l'une des revendications 1 à 5 comprenant, pour chaque groupe :
- pour chaque compteur (CPT) du groupe, une étape de détermination des deux autres compteurs (CPT) du groupe avec lesquels le compteur (CPT) considéré présente les similitudes les plus négatives, les trois compteurs (CPT) ainsi déterminés formant une triplette associée à un score de sorte à obtenir une pluralité de triplettes, les compteurs (CPT) d'une triplette présentant toujours une similitude négative deux à deux ;
- une étape de détermination de la triplette présentant le score le plus élevé, dite triplette de référence ;
- une étape d'association d'un sous-groupe à chaque compteur (CPT) de la triplette de référence de sorte à obtenir trois sous-groupes ;
puis pour chaque compteur (CPT) du groupe n'appartenant pas à la triplette de référence, le procédé (100) comprend :
- lorsque le compteur (CPT) présente une similitude négative avec deux et seulement deux des trois compteurs (CPT) de la triplette de référence, une étape d'association dudit compteur (CPT) au sous-groupe associé au compteur (CPT) de la triplette de référence avec lequel la similitude est positive ou nulle ;
- sinon, lorsque le compteur à une corrélation négative avec au moins deux autres compteurs associés à deux des trois sous-groupes :
▪ pour chaque sous-groupe parmi les trois sous-groupes, une sous-étape de détermination du compteur (CPT) associé audit sous-groupe avec lequel le compteur (CPT) considéré à la similitude la plus faible, dit compteur (CPT) intermédiaire, de sorte à obtenir un compteur (CPT) intermédiaire par sous-groupe ;
▪ si le compteur (CPT) considéré présente une similitude négative avec chaque compteur (CPT) intermédiaire, alors une sous-étape de classification dudit compteur (CPT) comme étant difficile à classer, ce dernier n'étant alors associé à aucun sous-groupe ;
▪ sinon, une sous-étape d'association du compteur (CPT) considéré au sous-groupe associé au compteur (CPT) intermédiaire avec lequel le compteur (CPT) considéré présente une similitude positive ou nulle ;
- sinon, une étape de classification dudit compteur (CPT) comme étant difficile à classer, ce dernier n'étant alors associé à aucun sous-groupe.

9. Dispositif (DI) électronique comprenant des moyens configurés pour mettre en œuvre un procédé selon l'une des revendications précédentes.

## Patentansprüche

1. Verfahren (100) zum Zuordnen jedes Zählers (CPT) einer Vielzahl von Zählern (CPT) zu einem dreiphasigen Abgang (DTP) eines Transformators (TRS) unter mindestens einem Transformator (TRS), wobei jeder Transformator (TRS) mindestens einen dreiphasigen Abgang (DTP) umfasst, wobei jeder dreiphasigen Abgang (STP) drei Phasen (DDP) umfasst, und jeder Zähler (CPT) mit genau einer einzigen Phase (DDP) verbunden ist; wobei das Verfahren (100) Folgendes umfasst:
- einen Schritt (1ED) zum Bestimmen einer Ähnlichkeit zwischen jeder Spannungsmessung jedes Zählers (CPT) der Vielzahl von Zählern (CPT), sodass eine Vielzahl von Paaren von Zählern (CPT) gebildet wird, wobei jede Spannungsmessung über einen Zeitraum, Messzeitraum genannt, erfolgt, wobei jedes Paar von Zählern (CPT) einer Ähnlichkeit zugeordnet wird;
wobei die Ähnlichkeit zwischen zwei Signalen bestimmt wird:
- mit Hilfe einer Funktion, die Folgendes annimmt:
• einen positiven Wert, wenn die zwei Signale über den berücksichtigten Zeitraum einen global ähnlichen Verlauf aufweisen;
• einen negativen Wert, wenn die zwei Signale über den berücksichtigten Zeitraum einen global entgegengesetzten Verlauf aufweisen;
• einen Nullwert, wenn die zwei Signale über den berücksichtigten Zeitraum einen global unabhängigen Verlauf aufweisen;
- durch eine Berechnung von Regressionskoeffizienten; oder
- durch eine Berechnung einer partiellen Korrelationsmatrix,
Verfahren **dadurch gekennzeichnet, dass** es außerdem Folgendes umfasst:
- einen Schritt (1ER) zum Gruppieren der Paare von Zählern (CPT), die eine negative Ähnlichkeit aufweisen, in Abhängigkeit von ihrer Ähnlichkeit derart, dass eine Vielzahl von Gruppen gebildet wird, wobei jede Gruppe einem dreiphasigen Abgang (DTP) zugeordnet wird.

2. Verfahren nach dem vorstehenden Anspruch, wobei die Funktion, die einen positiven Wert annimmt, wenn die zwei Signale über den berücksichtigten Zeitraum einen global ähnlichen Verlauf aufweisen; einen negativen Wert, wenn die zwei Signale über den berücksichtigten Zeitraum einen global entgegengesetzten Verlauf aufweisen, und einen Nullwert, wenn die zwei Signale über den berücksichtigten Zeitraum einen global unabhängigen Verlauf aufweisen, eine Pearson-Korrelation ist.

3. Verfahren (100) nach einem der vorstehenden Ansprüche, das außerdem vor dem Schritt (1ED) zum Bestimmen der Ähnlichkeit zwischen jeder Spannungsmessung jedes Zählers (CPT) der Vielzahl von Zählern (CPT) einen Schritt (1PT) zum Vorverarbeiten der Spannungsmessung umfasst, der von jedem Zähler (CPT) über den Messzeitraum durchgeführt wird.

4. Verfahren (100) zum Zuordnen eines der Ansprüche 1 bis 3, wobei der Schritt (1ER) zum Gruppieren für jedes Paar von Zählern (CPT) Folgendes umfasst:
- wenn die zwei Zähler (CPT) des Paares von Zählern (CPT) zu keiner Gruppe gehören, einen Unterschritt zum Schaffen einer Gruppe und Zuordnen der zwei Zähler (CPT) zu der Gruppe;
- wenn einer der zwei Zähler (CPT) des Paares von Zählern (CPT) bereits einer Gruppe zugeordnet ist, einen Unterschritt zum Zuordnen des Zählers (CPT), der noch nicht einer Gruppe zugeordnet ist, zu der Gruppe;
- wenn die zwei Zähler (CPT) des Paares von Zählern bereits zwei unterschiedlichen Gruppen zugeordnet sind, einen Unterschritt zum Fusionieren der zwei Gruppen.

5. Verfahren (100) zum Zuordnen nach einem der Ansprüche 1 bis 3, wobei der Schritt (1ER) zum Gruppieren einen ersten Unterschritt zum Klassifizieren der Paare von Zählern (CPT) gemäß der Ähnlichkeit von der negativsten bis zur am wenigsten negativen Ähnlichkeit umfasst und für jedes Paar von Zählern (CPT) in der Reihenfolge seiner Klassifizierung:
- wenn die zwei Zähler (CPT) des Paares von Zählern (CPT) zu keiner Gruppe gehören, einen Unterschritt zum Schaffen einer Gruppe und einen Unterschritt zum Zuordnen der zwei Zähler (CPT) zu der Gruppe;
- wenn einer der zwei Zähler (CPT) des Paares von Zählern (CPT) bereits einer Gruppe zugeordnet ist, einen Unterschritt zum Zuordnen des Zählers (CPT), der noch nicht einer Gruppe zugeordnet ist, zu der Gruppe;
- wenn die zwei Zähler (CPT) des Paares von Zählern (CPT) bereits zwei unterschiedlichen Gruppen zugeordnet sind, einen Unterschritt zum Fusionieren der zwei Gruppen, wenn mindestens ein anderes Paar von Zählern (CPT) vorhanden ist, das eine negative Ähnlichkeit aufweist, bei dem die zwei Zähler (CPT) denselben zwei Gruppen zugeordnet sind.

6. Verfahren (100) nach einem der vorstehenden Ansprüche, wobei der Abstand zwischen zwei Zählern (CPT) gleich dem Absolutwert der Ähnlichkeit zwischen den zwei Zählern (CPT) ist, wenn die Ähnlichkeit negativ ist, und der Nullwert, wenn die Ähnlichkeit positiv ist, und wobei das Verfahren für jede Gruppe einen Schritt zum Schaffen von drei Untergruppen umfasst, wobei jede Untergruppe derart aufgebaut wird, dass der mittlere Abstand zwischen zwei Zählern (CPT) unterschiedlicher Untergruppen möglichst groß ist, und der mittlere Abstand zwischen zwei Zählern (CPT), die zu derselben Untergruppe gehören, möglichst gering ist, wobei jede Untergruppe einer Phase (DDP) des dreiphasigen Abgangs (DTP) entspricht, der der betreffenden Gruppe zugeordnet wird.

7. Verfahren (100) nach einem der Ansprüche 1 bis 5, wobei der Abstand zwischen zwei Zählern (CPT) gleich dem Absolutwert der Ähnlichkeit zwischen den zwei Zählern (CPT) ist, wenn die Ähnlichkeit negativ ist, und der Nullwert, wenn die Ähnlichkeit positiv ist, und wobei das Verfahren für jede Gruppe einen Schritt zum Umsetzen eines Clustering-Algorithmus derart umfasst, dass drei Cluster von Zählern (CPT) erhalten werden, wobei jedes Cluster einer Phase (DDP) des dreiphasigen Abgangs (DTP), der der betreffenden Gruppe zugeordnet ist, entspricht.

8. Verfahren (100) nach einem der Ansprüche 1 bis 5, das für jede Gruppe Folgendes umfasst:
- für jeden Zähler (CPT) der Gruppe, einen Schritt zum Bestimmen der zwei anderen Zähler (CPT) der Gruppe, mit denen der betreffende Zähler (CPT) die negativsten Ähnlichkeiten aufweist, wobei die drei derart bestimmten Zähler (CPT) ein Tripel bilden, das einem ersten Score derart zu wird, dass eine Vielzahl von Tripeln erhalten wird, wobei die Zähler (CPT) eines Tripels stets paarweise eine negative Ähnlichkeit aufweisen;
- einen Schritt zum Bestimmen des Tripels, das den höchsten Score aufweist, Referenztripel genannt;
- einen Schritt zum Zuordnen einer Untergruppe zu jedem Zähler (CPT) des Referenztripels derart, dass drei Untergruppen erhalten werden;
das Verfahren (100) dann für jeden Zähler (CPT) der Gruppe, die nicht zu dem Referenztripel gehört, Folgendes umfasst:
- wenn der Zähler (CPT) eine negative Ähnlichkeit mit zwei und nur zwei der drei Zähler (CPT) des Referenztripels aufweist, einen Schritt zum Zuordnen des Zählers (CPT) zu der Untergruppe, die dem Zähler (CPT) des Referenztripels, mit dem die Ähnlichkeit positiv oder null ist, zugeordnet wird;
- andernfalls, wenn der Zähler eine negative Korrelation mit mindestens zwei anderen Zählern, die zwei der drei Untergruppen zugeordnet sind:
• für jede Untergruppe unter den drei Untergruppen einen Unterschritt zum Bestimmen des Zählers (CPT), der der Untergruppe zugeordnet ist, mit der der betreffende Zähler (CPT) die geringste Ähnlichkeit aufweist, Zwischenzähler genannt, sodass ein Zwischenzähler (CPT) pro Untergruppe erhalten wird;
• wenn der betreffende Zähler (CPT) eine negative Ähnlichkeit mit jedem Zwischenzähler (CPT) aufweist, einen Unterschritt zur Klassifizierung des Zählers (CPT) als schwierig zu klassifizieren, wobei Letzterer keiner Untergruppe zugeordnet wird;
• andernfalls einen Unterschritt zum Zuordnen des betreffenden Zählers (CPT) zu der Untergruppe, die dem Zwischenzähler (CPT) zugeordnet ist, mit dem der betreffende Zähler (CPT) eine positive Ähnlichkeit oder Ähnlichkeit gleich null aufweist;
• anderenfalls einen Schritt zum Klassifizieren des Zählers (CPT) als schwierig zu klassifizieren, wobei Letzterer dann keiner Untergruppe zugeordnet wird.

9. Elektronische Vorrichtung (DI), die Mittel umfasst, die dazu konfiguriert ist, ein Verfahren nach einem der vorstehenden Ansprüche umzusetzen.

## Claims

1. Method (100) for associating each meter (CPT) in a plurality of meters (CPT) with a three-phase output (DTP) of a transformer (TRS) among at least one transformer (TRS), each transformer (TRS) comprising at least one three-phase output (DTP), each three-phase output (STP) comprising three phases (DDP), and each meter (CPT) being connected to one and only one phase (DDP); the method (100) comprising:
- a step (1ED) of determining a similarity between each voltage measurement of each meter (CPT) in the plurality of meters (CPT) so as to form a plurality of pairs of meters (CPT), each voltage measurement being made over a period referred to as measurement period, each pair of meters (CPT) being associated with a similarity;
the similarity between two signals being determined:
- by means of a function taking:
∘ a positive value when the two signals, over the period taken into account, have an overall similar change;
∘ a negative value when the two signals, over the period taken into account, have an overall opposite change;
∘ a zero value, when the two signals, over the period taken into account, have an overall independent change;
- by a calculation of regression coefficients; or
- by a matrix calculation of partial correlations;
the method being **characterised in that** it furthermore comprises:
- a step (1ER) of grouping together pairs of meters (CPT) having a negative similarity according to their similarity so as to form a plurality of groups, each group being associated with a three-phase output (DTP).

2. Method according to the preceding claim, wherein the function taking a positive value when the two signals, over the period taken into account, have an overall similar change; a negative value when the two signals, over the period taken into account, have an overall opposite change; and a zero value, when the two signals, over the period taken into account, have an overall independent change, is a Pearson correlation.

3. Method (100) according to one of the preceding claims, furthermore comprising, before the step (1ED) of determining the similarity between each voltage measurement of each meter (CPT) in the plurality of meters (CPT), a step (1PT) of preprocessing the measurement of the voltage made by each meter (CPT) over the measurement period.

4. Association method (100) according to one of claims 1 to 3, wherein the grouping-together step (1ER) comprises, for each pair of meters (CPT):
- when the two meters (CPT) in said pair of meters (CPT) do not belong to any group, a sub-step of creating a group and of associating the two meters (CPT) with said group;
- when one of the two meters (CPT) in said pair of meters (CPT) is already associated with a group, a sub-step of associating the meter (CPT) not yet associated with a group with said group;
- when the two meters (CPT) in said pair of meters are already associated with two different groups, a sub-step of merging said two groups.

5. Association method (100) according to one of claims 1 to 3, wherein the grouping-together step (1ER) comprises a first sub-step of classifying the pairs of meters (CPT) from the most negative similarity to the least negative and, for each pair of meters (CPT) and in the order of classification thereof:
- when the two meters (CPT) in said pair of meters (CPT) do not belong to any group, a sub-step of creating a group and a sub-step of associating the two meters (CPT) with said group;
- when one of the two meters (CPT) in said pair of meters (CPT) is already associated with a group, a sub-step of associating the meter (CPT) not yet associated with a group with said group;
- when the two meters (CPT) in said pair of meters (CPT) are already associated with two different groups, a sub-step of merging said two groups if there exists at least one other pair of meters (CPT) having a negative similarity the two meters (CPT) of which are associated with the same two groups.

6. Method (100) according to one of the preceding claims, wherein the distance between two meters (CPT) is equal to the absolute value of the similarity between the two meters (CPT) when said similarity is negative and the value zero when said similarity is positive, and wherein, for each group, the method comprises a step of creating three subgroups, each subgroup being constructed so that the mean distance between two meters (CPT) of different subgroups is as great as possible and so that the mean distance between two meters (CPT) belonging to the same subgroup is as small as possible, each subgroup corresponding to a phase (DDP) of the three-phase output (DTP) associated with the group in question.

7. Method (100) according to one of claims 1 to 5, wherein the distance between two meters (CPT) is equal to the absolute value of the similarity between the two meters (CPT) when said similarity is negative and the value zero when said similarity is positive, and wherein, for each group, the method comprises a step of using a clustering algorithm so as to obtain three clusters of meters (CPT), each cluster corresponding to a phase (DDP) of the three-phase output (DTP) associated with the group in question.

8. Method (100) according to one of claims 1 to 5, comprising, for each group:
- for each meter (CPT) in the group, a step of determining the other two meters (CPT) in the group with which the meter (CPT) in question has the most negative similarities, the three meters (CPT) thus determined forming a triplet associated with a score so as to obtain a plurality of triplets, the meters (CPT) in a triplet always having a negative similarity two by two;
- a step of determining the triplet having the highest score, referred to as reference triplet;
- a step of associating a subgroup with each meter (CPT) in the reference triplet so as to obtain three subgroups;
then, for each meter (CPT) in the group not belonging to the reference triplet, the method (100) comprises:
- when the meter (CPT) has a negative similarity to two and only two of the three meters (CPT) in the reference triplet, a step of associating said meter (CPT) with the subgroup associated with the meter (CPT) in the reference triplet to which the similarity is positive or zero;
- otherwise, when the meter has a negative correlation with at least two other meters associated with two of the three subgroups:
▪ for each subgroup among the three subgroups, a sub-step of determining the meter (CPT) associated with said subgroup to which the meter (CPT) in question has the lowest similarity, referred to as intermediate meter (CPT), so as to obtain one intermediate meter (CPT) per subgroup;
▪ if the meter (CPT) in question has a negative similarity to each intermediate meter (CPT), then a sub-step of classifying said meter (CPT) as being difficult to classify, the latter then not being associated with any subgroup;
▪ otherwise a sub-step of associating the meter (CPT) in question with the subgroup associated with the intermediate meter (CPT) to which the meter (CPT) in question has a positive or zero similarity;
- otherwise, a step of classifying said meter (CPT) as being difficult to classify, the latter then not being associated with any subgroup.

9. Electronic device (TI) comprising means configured to implement a method according to one of the preceding claims.
